# EUROPÄISCHE PATENTSCHRIFT

(11) **EP 1 051 579 B1**
(45) Veröffentlichungstag und Bekanntmachung des Hinweises auf die Patenterteilung: **14.04.2004**
(21) Anmeldenummer: 99932423.9
(22) Anmeldetag: 26.01.1999
(51) Int. Cl.: F16N 13/02, B27B 17/12

(54) **KETTENMEDIUMPUMPE FÜR EINE MOTORKETTENSÄGE SOWIE MOTORKETTENSÄGE MIT EINER SOLCHEN KETTENMEDIUMPUMPE**
CHAIN FLUID PUMP FOR A POWER CHAIN SAW AND POWER CHAIN SAW COMPRISING SUCH A CHAIN FLUID PUMP
POMPE A FLUIDE POUR CHAINE DESTINEE A UNE TRONCONNEUSE A CHAINE, ET TRONCONNEUSE A CHAINE EQUIPEE D'UNE TELLE POMPE

(30) Priorität: 28.01.1998 DE 19803131
(43) Veröffentlichungstag der Anmeldung: 15.11.2000
(73) Patentinhaber: Dolmar GmbH, 22045 Hamburg (DE)
(72) Erfinder: Krahn, Klemens, 22851 Norderstedt (DE)
(74) Vertreter: Gerbaulet, Hannes, Dipl.-Ing.
(86) Internationale Anmeldenummer: PCT/EP1999/000450
(87) Internationale Veröffentlichungsnummer: WO 1999/039128

(56) Entgegenhaltungen:
- EP-A- 0 560 201
- US-A- 4 132 289
- US-A- 4 636 147
- US-A- 4 801 253
- US-A- 5 184 403
- US-A- 5 478 217

## Beschreibung

### Technisches Gebiet

Die vorliegende Erfindung bezieht sich auf das Gebiet der motorgetriebenen Handarbeitsgeräte. Sie betrifft eine Kettenmediumpumpe für eine Motorkettensäge, die das Kettenmedium über eine Saugleitung aus einem Tank ansaugt und über eine Druckleitung zu einer Sägevorrichtung der Motorkettensäge befördert.

Die Erfindung betrifft weiterhin eine Motorkettensäge mit einer Kettenmediumpumpe.

### Stand der Technik

Bei motorbetriebenen Kettensägen ist es üblich, zur Schmierung der Kette mit einem Kettenmedium, insbesondere Oel, eine spezielle Kettenmediumpumpe vorzusehen, die von dem Motor der Kettensäge angetrieben wird, und während des Betriebes der Säge fortlaufend ein schmierendes Kettenmedium aus einem Vorratsbehälter (Tank) ansaugt und zur Kette befördert, wo es an geeigneter Stelle in Kontakt mit der umlaufenden Sägekette gebracht wird. Derartige Kettenmediumpumpen sind beispielsweise aus früheren Anmeldungen der Anmelderin, insbesondere der US-A-4,465,440 und der EP-B1-0 560 201, bekannt.

Als Kettenmediumpumpe wird im Stand der Technik meist eine Kolbenpumpe eingesetzt, bei welcher ein in einem Zylinder arbeitender Kolben über ein Schneckengetriebe von dem Motor der Kettensäge in Rotation um die Kolbenachse versetzt wird, und diese Rotation durch geeignete Führungsmittel (z.B. eine schräg zur Kolbenachse stehende Fläche, mit welcher der rotierende unter Federvorspannung stehende Kolben an einem Führungsstift abläuft) in eine periodische Hubbewegung des Kolbens umgewandelt wird. Beispiele für derartige Kolbenpumpen sind aus den eingangs genannten Druckschriften, aber z.B. auch aus der US-A-3,938,622, der US-A-5,236,314 oder der US-A-4,801,253, bekannt.

Wenn die Kettenmediumpumpe über das Schneckengetriebe fest mit dem Motor (z.B. der Kurbelwelle eines schnellaufenden 2-Takt-Verbrennungsmotors) verbunden ist, fördert sie - wenn nicht entsprechende Massnahmen getroffen werden - auch dann Kettenmedium zur Sägekette, wenn die Sägekette vom laufenden Motor abgekoppelt ist und still steht. Eine solche Förderung bei stehender Kette ist jedoch unerwünscht. Grundsätzlich wäre es möglich, die Kettenmediumpumpe durch geeignete mechanische Vorrichtungen ebenfalls vom Motor abzukoppeln, wenn die Sägekette entkoppelt ist. Eine solche Kupplungsvorrichtung wäre jedoch nicht nur aufwendig und teuer in der Herstellung, sondern würde auch einen erheblichen zusätzlichen Platz an der möglichst kompakt aufgebauten Kettensäge beanspruchen und liesse sich nicht ohne weiteres in bereits vorhandene Motorkettensägen nachträglich integrieren.

Aus der US-PS 5,184,403 ist eine Kettenmediumpumpe für eine Motorkettensäge gemäß dem Oberbegtiff von Anspruch 1 bekannt.

### Darstellung der Erfindung, Aufgabe, Lösung, Vorteile

Es ist daher Aufgabe der Erfindung, eine Kettenmediumpumpe zu schaffen, mit welcher auf einfache und platzsparende Weise eine Abschaltfunktion der Pumpe bei stehender Kette realisiert werden kann, und welche nur geringe Aenderungen an vorhandenen Pumpen modellen erforderlich macht.

Die Aufgabe wird bei einer Kettenmediumpumpe der eingangs genannten Art dadurch gelöst, daß zum Abschalten der Versorgung der Sägevorrichtung mit dem Kettenmedium steuerbare Mittel vorhanden sind, mittels derer bei laufender Kettenmediumpumpe die Druckleitung unterbrochen und gleichzeitig das von der Kettenmediumpumpe geförderte Kettenmedium in die Ansaugleitung zurückgeleitet werden kann. Durch das Unterbrechen der Druckleitung und gleichzeitige Rückführen des geförderten Kettenmediums auf die Ansaugseite kann die Kettenmediumpumpe beim Stillstand der Sägekette ungehindert weiterlaufen, ohne daß Kettenmedium bis zur Kette befördert wird. Die Kettenmediumpumpe pumpt dabei das Kettenmedium in einem geschlossenen Kreislauf um, ohne zusätzlichen Belastungen ausgesetzt zu sein.

Eine erste bevorzugte Ausführungsform der Kettenmediumpumpe nach der Erfindung ist dadurch gekennzeichnet, daß die steuerbaren Mittel ein in der Druckleitung angeordnetes Umsteuerventil und einen vom Umsteuerventil zur Saugleitung geführten Bypass umfassen. Durch das Umsteuerventil wird eine leicht bedienbare, platzsparende Steuerfunktion mit eindeutigem EIN/AUS-Charakter realisiert. Der Bypass kann durch wenige zusätzliche Elemente leicht in die Pumpe integriert werden.

Ein besonders robuster und kompakter Aufbau der Anordnung wird erreicht, wenn gemäss einer zweiten bevorzugten Ausführungsform der erfindungsgemässen Kettenmediumpumpe die Kettenmediumpumpe in einem Pumpengehäuse untergebracht ist, und das Umsteuerventil und der Bypass in das Pumpengehäuse integriert sind. Bevorzugt ist dabei wegen der Einfachheit und Funktionssicherheit das Umsteuerventil als Schwenkkolbenventil ausgebildet.

Eine weitere bevorzugte Ausführungsform der Kettenmediumpumpe nach der Erfindung ist dadurch gekennzeichnet, daß die Kettenmediumpumpe einen in einer Zylinderbohrung im Pumpengehäuse axial beweglichen Pumpenkolben umfasst, daß zur Bildung des Umsteuerventils in dem Pumpengehäuse auf der Druckseite eine mit der Zylinderbohrung über einen Druckkanal verbundene Ventilbohrung angeordnet ist, in welcher ein im wesentlichen zylindrischer Ventilkörper mit einem Schwenkkolben eingesetzt und schwenkbar gelagert ist, und daß der Bypass durch zwei Durchgangsbohrungen gebildet wird, welche innerhalb des Pumpengehäuses von der Ventilbohrung bzw. von der Saugleitung ausgehend auf gleicher Höhe in die Zylinderbohrung münden und durch eine auf dem Pumpenkolben angeordnete Ringnut miteinander verbunden sind. Diese Art der Rückführung lässt sich besonders einfach in vorhandene Pumpenkonzepte integrieren, wenn - wie in den Druckschriften US-A-4,465,440 und EP-B1-0 560 201 der Anmelderin beschrieben - in den Pumpenkonzepten aus anderen Gründen bereits ein Pumpenkolben mit Ringnut und ein Durchgangsbohrung zwischen Druckleitung und Ringnut vorhanden sind.

Der Schwenkkolben weist vorzugsweise eine sich in axialer Richtung erstreckende kreissegmentförmige Aussparung aufweist, welche in einer ersten Stellung des Schwenkkolbens den Druckkanal mit der in axialer Richtung abgehenden Druckleitung verbindet; der Schwenkkolben weist weiterhin eine Verbindungsnut auf, welche in einer zweiten Stellung des Schwenkkolbens den Druckkanal und die erste Durchgangsbohrung untereinander verbindet.

Die erfindungsgemässe Motorkettensäge mit einer Kettenmediumpumpe nach der Erfindung ist dadurch gekennzeichnet, daß die Motorkettensäge eine Sicherheitstaste umfasst, mittels derer bei laufendem Motor die Sägevorrichtung aktivierbar und deaktivierbar ist, und daß die Sicherheitstaste und die steuerbaren Mittel bzw. das Umsteuerventil über Betätigungsmittel derart in Wirkverbindung stehen, daß beim Loslassen der Sicherheitstaste die Druckleitung selbsttätig unterbrochen und beim Betätigen der Sicherheitstaste die Unterbrechung der Druckleitung selbsttätig aufgehoben wird. Durch die Kopplung der abschaltbaren Kettenmediumpumpe mit der Sicherheitstaste wird eine Ansteuerfunktion realisiert, welche eine eindeutige EIN/AUS-Funktion gewährleistet und weitgehend fehler- und toleranzunempfindlich arbeitet.

Die Abschaltfunktion wird dabei durch das Loslassen des hinteren Handgriffes der Kettensäge ausgelöst, wobei die Sägekette noch nicht stehen muss, sondern sich je nach Bedienergewohnheit noch im Auslaufen befinden kann. Diese "vorgezogene" Abschaltung der Förderung des Kettenmediums bewirkt, daß überschüssiges Kettenmedium im Schienenanschlussbereich der Kettenschiene von der auslaufenden Kette in die Schiene transportiert wird. Dadurch wird vorteilhafterweise ein Ablaufen des Kettenmediums aus dem Ketteneinlaufbereich und somit eine zusätzliche Verunreinigung der Maschine reduziert.

Der besondere Vorteil dieser Ansteuerung liegt darin, daß die Kettenschmierung bereits beim Betätigen der Sicherheitstaste einsetzt. Somit ist sichergestellt, daß das Kettenmedium bereits einige Sekunden vor Anlaufen der Sägekette gefördert wird, und die Kette ausreichend geschmiert ist, bevor der Bediener in den Schnitt geht. Desweiteren bietet die Nutzung der Sicherheitsstaste den Vorteil, daß die erforderlichen Betätigungskräfte für das Ventil von dem Bediener praktisch gar nicht wahrgenommen werden, da sie im Verhältnis zur Haltekraft der Maschine bzw. zur aufgewendeten Handkraft vernachlässigbar sind. Für die Ventilbetätigung ist - je nach ausgeführten Hebelübersetzungen - eine Kraft von z.B. 2 bis 5 N erforderlich.

Gemäss einer bevorzugten Ausführungsform der Motorkettensäge nach der Erfindung umfassen die Betätigungsmittel einen Bowdenzug, der einfach und kostengünstig ist.

Weitere Ausführungsformen ergeben sich aus den abhängigen Ansprüchen.

### Kurze Beschreibung der Zeichnungen

Die Erfindung soll nachfolgend anhand von Ausführungsbeispielen im Zusammenhang mit der Zeichnung näher erläutert werden. Es zeigen
- Fig. 1: in einer schematisierten Darstellung die wesentlichen Funktionsblöcke einer Motorkettensäge gemäss einem bevorzugten Ausführungsbeispiel der Erfindung;
- Fig. 2: im Längsschnitt (untere Hälfte der Figur) und im Querschnitt A-A (obere Hälfte der Figur) einen Ventilkörper für ein Umsteuerventil gemäss einem bevorzugten Ausführungsbeispiel der Erfindung;
- Fig. 3: in einer Schnittdarstellung ein beispielhaftes Pumpengehäuse für eine Anordnung nach Fig. 1 zum Einsatz eines Ventilkörpers gemäss Fig. 2;
- Fig. 4: die Kettenmediumpumpe gemäss Fig. 3 mit dem eingesetzten Ventilkörper nach Fig. 2 in einer ersten Ventilstellung, bei welcher das Kettenmedium zur Kette gepumpt wird (Normalbetrieb); und
- Fig. 5: in einer zu Fig. 4 vergleichbaren Darstellung eine zweite Ventilstellung, bei der das Kettenmedium über den Bypass in die Saugleitung zurückgeführt wird.

### Bester Weg zur Ausführuung der Erfindung

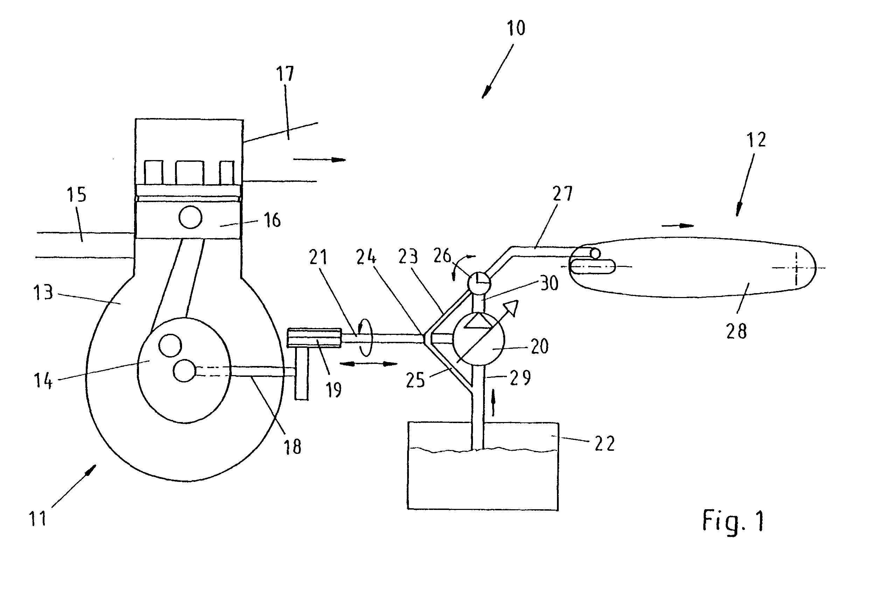

In Fig. 1 sind in einer schematisierten Darstellung die wesentlichen Funktionsblöcke einer Motorkettensäge 10 gemäss einem bevorzugten Ausführungsbeispiel der Erfindung wiedergegeben. Die Motorkettensäge 10 umfasst als Antrieb einen Motor 11 in Form einer 2-Takt-Verbrennungskraftmaschine, die mit einem Kurbelgehäuse 13, einer Kurbelwelle 14, einem Kolben 16, einem Saugrohr 15 und einem Auslass 17 ausgerüstet ist. Von dem Motor 11 wird in üblicher (in Fig. 1 nicht dargestellter) Weise eine Sägevorrichtung 12 mit einer in einer Kettenschiene um ein Kettenschwert 28 umlaufenden Sägekette angetrieben (siehe dazu auch Fig. 1 der EP-B1-0 560 201).

Gleichzeitig treibt der Motor 11 über eine von der Kurbelwelle 14 abgehende Antriebswelle 18 und ein Schneckengetriebe 19 den rotierenden und gleichzeitig periodische Hubbewegungen ausführenden Pumpenkolben 21 einer Kettenmediumpumpe 20 an. Der Pumpenkolben 21 und die Antriebsmechanik ist dabei vorzugsweise so ausgebildet, wie dies in den älteren Druckschriften EP-B1-0 560 201 und US-A-4,465,440 der Anmelderin beschrieben und dargestellt ist. Die Kettenmediumpumpe 20 fördert über eine Saugleitung 29 das Kettenmedium aus einem Vorratsbehälter oder Tank 22 und drückt es über einen Druckkanal 30, ein Umsteuerventil 26 und eine Druckleitung zur Sägekette in der Sägevorrichtung 12. Vom Umsteuerventil 26 führt ein Bypass, der sich aus zwei Durchgangsbohrungen 23, 25 und einer auf dem Pumpenkolben 21 angeordneten Ringnut 24 zusammensetzt, zur Saugleitung 29 zurück.

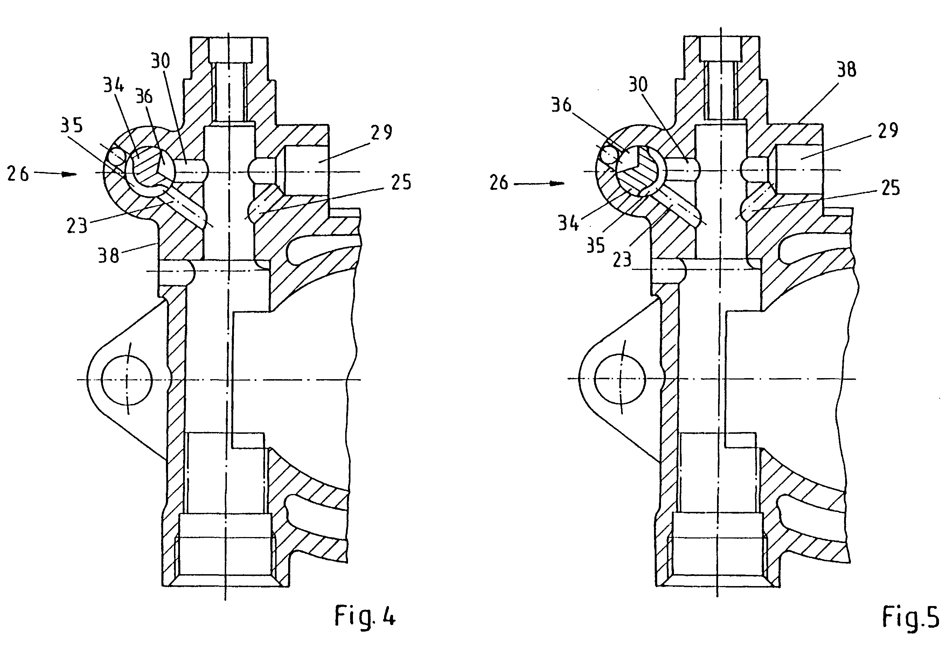

Das Umsteuerventil 26 kann zwei Ventilstellungen einnehmen (siehe dazu auch Fig. 4 und 5). In der einen Ventilstellung sind der Druckkanal 30 und die Druckleitung 27 untereinander verbunden (Fig. 4). In diesem Fall befördert die Kettenmediumpumpe 20 in herkömmlicher Weise das Kettenmedium zur Sägekette. In der anderen Ventilstellung ist die Druckleitung 27 vom Druckkanal 30 abgetrennt, während der Druckkanal 30 mit der Durchgangsbohrung 23 verbunden ist. In diesem Fall pumpt die Kettenmediumpumpe 20 das Kettenmedium in einem durch den Bypass geschlossenen Kreislauf herum, ohne das Kettenmedium in die Druckleitung 27 gelangt. Das Umsteuerventil 26 wird vorzugsweise mittels der Sicherheitstaste der Motorsäge (15 in Fig. 1 der EP-B1-0 560 201) über einen Bowdenzug betätigt.

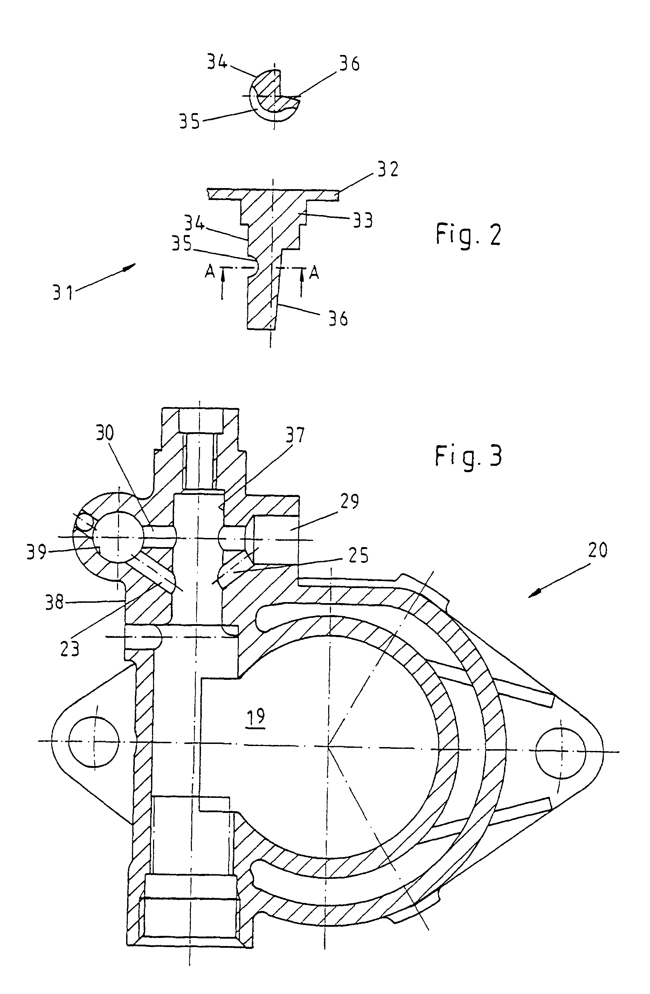

Die mit der Erfindung mögliche, besonders einfache und kompakte Integration des Umsteuerventils 26 und des Bypasses in die Kettenmediumpumpe unter Ausnutzung bereits vorhandener Pumpenelemente kann anhand der Fig. 2 und 3 verdeutlicht werden: Die Kettenmediumpumpe 20 weist gemäss Fig. 3 ein Pumpengehäuse 38 auf, wie es vergleichbar auch in der EP-B1-0 560 201 und der US-A-4,465,440 gezeigt ist. Der Pumpenkolben selbst ist in Fig. 3 der Uebersichtlichkeit halber nicht eingezeichnet, hat aber im wesentlichen den gleichen Aufbau, wie in den beiden vorerwähnten Druckschriften beschrieben. Auch das Schneckengetriebe 19 ist nicht explizit dargestellt. Im oberen Bereich weist das Pumpengehäuse 38 eine Zylinderbohrung 37 auf, in welcher der Pumpenkolben seine Hub- und Drehbewegungen ausführt. Die Zylinderbohrung 37 ist auf der einen Seite durch eine quer verlaufende Anschlussbohrung an die Saugleitung 29 anschliessbar. Auf der gegenüberliegenden Seite geht von der Zylinderbohrung 37 quer die Druckbohrung 30 ab. Die Druckbohrung 30 endet in einer im Pumpengehäuse 38 senkrecht zur Druckbohrung 30 und zur Zylinderbohrung 37 angeordneten Ventilbohrung 39.

Von der Ventilbohrung 39 geht schräg zurück in die Zylinderbohrung 37 eine erste Durchgangsbohrung 23. Diese Durchgangsbohrung 23 entspricht der Bohrung 14 in der Figur der US-A-4,465,440. Auf der gegenüberliegenden Seite geht von dem Anschluss der Druckleitung 29 ebenfalls schräg in die Zylinderbohrung 37 eine zweite Durchgangsbohrung 25, die in etwa auf derselben Höhe in die Zylinderbohrung 37 mündet, wie die erste Durchgangsbohrung 23. Beide Durchgangsbohrungen 23, 25 werden über die umlaufende Nut des eingesetzten Pumpenkolbens in der Zylinderbohrung 37 miteinander verbunden.
In die Ventilbohrung 39 wird zur Realisierung des Umsteuerventils 26 ein Ventilkörper 31 gemäss Fig. 2 eingesetzt. Der Ventilkörper 31 umfasst einen im wesentlichen zylindrischen Schwenkkolben 34, mit welchem er verschwenkbar in der Ventilbohrung 39 steckt, sowie einen Kopf 33 mit einer angeformten Betätigungsscheibe 32, an welcher der Bowdenzug angreift, und welche mit ihrem vergrösserten Durchmesser für den nötigen Hebelarm sorgt. Am Schwenkkolben 34 ist auf der einen Seite eine in Achsenrichtung sich erstreckende kreissegmentförmige Aussparung 36 vorgesehen, die von kurz unterhalb des Kopfes 33 bis zum Ende des Ventilkolbens 34 reicht. Auf der anderen Seite ist auf dem Umfang des Ventilkolbens 34 eine über einen Winkel von etwa 160° umlaufende Verbindungsnut 35 angebracht.

Ist der Ventilkörper 31 aus Fig. 2 in die Ventilbohrung 39 im Pumpengehäuse 38 gemäss Fig. 3 eingesetzt, ergeben sich die in Fig. 4 und 5 dargestellten zwei Ventilstellungen. In der Ventilstellung nach Fig. 4 wird der Druckkanal 30 über die Aussparung 36 im Ventilkörper 34 verbunden mit der nach unten aus der Ventilbohrung 39 heraus abgehenden Druckleitung 27. In dieser Stellung pumpt die Kettenmediumpumpe das Kettenmedium zur Sägevorrichtung 12. In der Ventilstellung der Fig. 5 werden der Druckkanal 30 und die Durchgangsbohrung 23 über die Verbindungsnut im Ventilkörper 34 untereinander verbunden. Eine Verbindung zur Druckleitung 27 ist dagegen nicht vorhanden, weil die Verbindungsnut 35 nur quer zur Ventilachse verläuft. In dieser Stellung wird das von der Pumpe geförderte Kettenmedium aus dem Druckkanal 30 über die Durchgangsbohrung 23, die Ringnut auf dem Pumpenkolben, und die Durchgangsbohrung 25 zurück in die Saugleitung 29 geführt.

Zum Erreichen eines Förderstops der Kettenmediumpumpe im Leerlauf wird also ein 3/2-Wege-Umsteuerventil verwendet, welches in die Ausgangsseite der Pumpe integriert ist. Im unbetätigten Zustand (nicht betätigte Sicherheitstaste) wird der Förderstrom über einen Bypass zur Saugleitung 29 zurückgeführt, d.h. im Kreis gefördert. Das Besondere an dem Bypass ist die Lage in der Pumpenkolbenachse. Um den Bypass fertigungstechnisch herzustellen, ist (gegenüber der Pumpe aus der US-A-4,465,440) lediglich eine zusätzliche Bohrung (Durchgangsbohrung 25) von z.B. 1,5 mm auf der Saugseite der Pumpe erforderlich. Gusstechnisch bedarf der Pumpenkörper (Pumpengehäuse 38) keiner Aenderung. Zur Aufnahme des Ventilkörpers 31 wird die Ausgangsbohrung lediglich auf eine Ventilbohrung 39 von z.B. 6 mm aufgebohrt und gerieben. Eine zusätzliche Abdichtung ist nicht erforderlich. Der Pumpenkolben aus der US-A-4,465,440 besitzt eine Ringnut von 0,8 x 0,3 mm zur Leckölsammlung. Diese Ringnut wird als Teil der Bypassleitung benutzt und muss zu diesem Zweck auf 1,2 x 0,5 mm vergrössert werden, um über den gesamten Hubweg des Pumpenkolbens die Verbindung zwischen den Bohrungen 23, 25 sicherzustellen.

Das Umsteuerventil 26 bzw. der Ventilkörper 31 ist als Kunststoff-Spritzgussteil ausgeführt und kann mit einer Verschnappung ausgeführt werden, wodurch sich ein Haltestift zur axialen Sicherung einsparen lässt. Die Bowdenzugführung in Form eines Viertelkreises ist an den Grundkörper mit angespritzt. Als Steuerweg ist ein Winkel von 60° bis 90° erforderlich, wodurch das System unanfällig gegen eine Längung des Bowdenzuges ist. Die Rückstellkräfte werden zweckmässigerweise über eine unterhalb der Bowdenzugführung sitzende Drehfeder erzeugt. Das Gegenlager des Bowdenzuges wird praktischerweise in das Motorgehäuse integriert, so daß keine zusätzlichen Kosten entstehen.

Insgesamt ergibt sich mit der Erfindung eine Motorkettensäge mit automatisch abschaltender Kettenmediumpumpe, die einfach und funktionssicher aufgebaut, kompakt und leicht zu bedienen ist. Die automatische Abschaltung kann mit wenig Aufwand von bestehenden Pumpenmodellen ausgehend realisiert werden.

### BEZUGSZEICHENLISTE

- 10: Motorkettensäge
- 11: Motor
- 12: Sägevorrichtung
- 13: Kurbelgehäuse
- 14: Kurbelwelle
- 15: Saugrohr
- 16: Kolben
- 17: Auslass
- 18: Antriebswelle (Kettenmediumpumpe)
- 19: Schneckengetriebe
- 20: Kettenmediumpumpe
- 21: Pumpenkolben
- 22: Tank (Kettenmedium)
- 23: Durchgangsbohrung
- 24: Ringnut (Pumpenkolben)
- 25: Durchgangsbohrung
- 26: Umsteuerventil
- 27: Druckleitung
- 28: Kettenschwert
- 29: Saugleitung
- 30: Druckkanal
- 31: Ventilkörper
- 32: Betätigungsscheibe
- 33: Kopf
- 34: Schwenkkolben
- 35: Verbindungsnut
- 36: Aussparung (kreissegmentförmig)
- 37: Zylinderbohrung
- 38: Pumpengehäuse
- 39: Ventilbohrung

## Patentansprüche

1. Kettenmediumpumpe (20) für eine Motorkettensäge (10), welche Kettenmediumpumpe (20) das Kettenmedium über eine Saugleitung (29) aus einem Tank (22) ansaugt und über eine Druckleitung (27) zu einer Sägevorrichtung (12) der Motorkettensäge (10) befördert, wobei zum Abschalten der Versorgung der Sägevorrichtung (12) mit dem Kettenmedium steuerbare Mittel (23-26) vorhanden sind, **dadurch gekennzeichnet, daß** mittels der zum Abschalten der Versorgung der Sägevorrichtung (12) mit dem Kettenmedium steuerbaren Mittel (23-26) bei laufender Kettenmediumpumpe (20) die Druckleitung (27) unterbrochen und gleichzeitig das von der Kettenmediumpumpe (20) geförderte Kettenmedium in die Saugleitung (29) zurückgeleitet werden kann.

2. Kettenmediumpumpe nach Anspruch 1,
**dadurch gekennzeichnet,**
**daß** die steuerbaren Mittel ein in der Druckleitung (27) angeordnetes Umsteuerventil (26) und einen vom Umsteuerventil (26) zur Saugleitung (29) geführten Bypass (23, 24, 25) umfassen.

3. Kettenmediumpumpe nach Anspruch 2,
**dadurch gekennzeichnet,**
**daß** die Kettenmediumpumpe (20) in einem Pumpengehäuse (38) untergebracht ist, und daß das Umsteuerventil (26) und der Bypass (23, 24, 25) in das Pumpengehäuse (38) integriert sind.

4. Kettenmediumpumpe nach Anspruch 3,
**dadurch gekennzeichnet,**
**daß** das Umsteuerventil (26) als Schwenkkolbenventil ausgebildet ist.

5. Kettenmediumpumpe nach Anspruch 4,
**dadurch gekennzeichnet,**
**daß** die Kettenmediumpumpe (20) einen in einer Zylinderbohrung (37) im Pumpengehäuse (38) axial beweglichen Pumpenkolben (21) umfasst, daß zur Bildung des Umsteuerventils (26) in dem Pumpengehäuse (38) auf der Druckseite eine mit der Zylinderbohrung (37) über einen Druckkanal (30) verbundene Ventilbohrung (39) angeordnet ist, in welcher ein im wesentlichen zylindrischer Ventilkörper (31) mit einem Schwenkkolben (34) eingesetzt und schwenkbar gelagert ist, und daß der Bypass durch zwei Durchgangsbohrungen (23, 25) gebildet wird, welche innerhalb des Pumpengehäuses (38) von der Ventilbohrung (39) bzw. von der Saugleitung (29) ausgehend auf gleicher Höhe in die Zylinderbohrung (37) münden und dort durch eine auf dem Pumpenkolben (21) angeordnete Ringnut (24) miteinander verbunden sind.

6. Kettenmediumpumpe nach Anspruch 5,
**dadurch gekennzeichnet,**
**daß** der Schwenkkolben (34) eine sich in axialer Richtung erstreckende kreissegmentförmige Aussparung (36) aufweist, welche in einer ersten Stellung des Schwenkkolbens (34) den Druckkanal (30) mit der in axialer Richtung abgehenden Druckleitung (27) verbindet, und daß der Schwenkkolben (34) eine Verbindungsnut (35) aufweist, welche in einer zweiten Stellung des Schwenkkolbens (34) den Druckkanal (30) und die erste Durchgangsbohrung (23) untereinander verbindet.

7. Kettenmediumpumpe nach Anspruch 6,
**dadurch gekennzeichnet,**
**daß** der Schwenkwinkel des Schwenkkolbens (34) zwischen den beiden Stellungen zwischen 60° und 90° beträgt.

8. Kettenmediumpumpe nach einem der Ansprüche 5 bis 7,
**dadurch gekennzeichnet,**
**daß** der Ventilkörper (31) als Kunststoff-Spritzgussteil ausgeführt ist.

9. Kettenmediumpumpe nach einem der Ansprüche 5 bis 8,
**dadurch gekennzeichnet,**
**daß** der Ventilkörper (31) mit einer Verschnappung ausgeführt ist, mit welcher er in der Ventilbohrung (39) axial gesichert ist.

10. Motorkettensäge (10) mit einer Kettenmediumpumpe (20) nach einem der Ansprüche 1 bis 9,
**dadurch gekennzeichnet,**
**daß** die Motorkettensäge (10) eine Sicherheitstaste umfasst, mittels derer bei laufendem Motor die Kettenmediumförderung aktivierbar und deaktivierbar ist, und daß die Sicherheitstaste und die steuerbaren Mittel bzw. das Umsteuerventil (26) über Betätigungsmittel derart in Wirkverbindung stehen, daß beim Loslassen der Sicherheitstaste die Druckleitung (27) selbsttätig unterbrochen und beim Betätigen der Sicherheitstaste die Unterbrechung der Druckleitung (27) selbsttätig aufgehoben wird.

11. Motorkettensäge nach Anspruch 10,
**dadurch gekennzeichnet,**
**daß** die Betätigungsmittel einen Bowdenzug umfassen.

## Claims

1. A chain medium pump (20) for a motor-driven chain saw (10) which motor-driven chain saw (20) sucks the chain medium over a suction pipe (29) from a tank (22) and which delivers it over a pressure pipe (27) to a sawing device (12) of the motor-driven chain saw (10) whereby, for disconnecting the supply of the sawing device (12) with the chain medium, there are controllable means (23-26),
**characterized in that**, by means of the controllable means (23-26) for disconnecting the supply of the sawing device (12) with the chain medium, the chain medium pump (20) being running, the pressure pipe (27) is interrupted and simultaneously the chain medium delivered by the chain medium pump (20) can be returned into the suction pipe (29).

2. A chain medium pump according to claim 1,
**characterized in**
**that** the controllable means comprise a reverse valve (26) placed in the pressure pipe (27) and a bypass (23, 24, 25) led from the reverse valve (26) to the suction pipe (29).

3. A chain medium pump according to claim 2,
**characterized in**
**that** the chain medium pump (20) is placed in a pump case (38) and that the reverse valve (26) and the bypass (23, 24, 25) are integrated into the pump case (38).

4. A chain medium pump according to claim 3,
**characterized in**
**that** the reverse valve (26) is configured as a swivelling piston valve.

5. A chain medium pump according to claim 4,
**characterized in**
**that** the chain medium pump (20) comprises a pump piston (21) axially movable in a cylinder bore (37) in the pump case (38), that, for constituting the reverse valve (26), a valve bore (39) which is connected with the cylinder bore (37) over a pressure channel (30) is placed in the pump case (38) on the delivery side, valve bore in which a substantially cylindrical valve body (31) with a swivelling piston (34) is placed and swivellably positioned and that the bypass is formed by two through bore holes (23, 25) which discharge within the pump case (38) starting from the valve bore (39) or from the suction pipe (29) at the same level into the cylinder bore (37) and which are connected there with each other by a ring groove (24) placed on the pump piston (21).

6. A chain medium pump according to claim 5,
**characterized in**
**that** the swivelling piston (34) has a recess (36) in form of an axially extending segment of a circle which connects, in a first position of the swivelling piston (34), the pressure channel (30) with the axially outgoing pressure pipe (27) and that the swivelling piston (34) has a connecting groove (35) which connects, in a second position of the swivelling piston (34), the pressure channel (30) and the first through bore (23) the one with the other.

7. A chain medium pump according to claim 6,
**characterized in**
**that** the swivelling angle of the swivelling piston (34) between the two positions is between 60° and 90°.

8. A chain medium pump according to one of the claims 5 to 7,
**characterized in**
**that** the valve body (31) is constructed as a plastic injection moulded part.

9. A chain medium pump according to one of the claims 5 to 8,
**characterized in**
**that** the valve body (31) is constructed with a snap connection with which it is axially locked in the valve bore (39).

10. A motor chain saw with a chain medium pump (20) according to one of the claims 1 to 9,
**characterized in**
**that** the motor chain saw (10) comprises a safety key with which, the motor being running, the chain medium transport can be activated and desactivated and that the safety key and the controllable means or the reverse valve (26) are operationally connected with each other over actuating means so that, when releasing the safety key, the pressure pipe (27) is automatically interrupted and, when actuating the safety key, the interruption of the pressure pipe (27) is automatically suppressed.

11. A motor chain saw according to claim 10,
**characterized in**
**that** the actuating means comprise a Bowden cable.

## Revendications

1. Pompe de fluide de chaîne (20) pour une tronçonneuse à chaîne (10), laquelle pompe de fluide à chaîne (20) aspire le fluide de chaîne par une conduite d'aspiration (29) à partir d'un réservoir (22) et le transporte par une conduite de refoulement (27) à un dispositif de scie (12) de la tronçonneuse à chaîne (10), des moyens pouvant être commandés (23-26) existant pour déconnecter l'alimentation du dispositif de scie (12) avec le fluide de chaîne, **caractérisée en ce que** la conduite de refoulement (27) est interrompue au moyen des moyens pouvant être commandés (23-26) pour déconnecter l'alimentation du dispositif de scie (12) avec le fluide de chaîne, la pompe de fluide de chaîne (20) étant en marche, et simultanément le fluide de chaîne transporté par la pompe de fluide de chaîne (20) pouvant être retourné dans la conduite d'aspiration (29).

2. Pompe de fluide de chaîne selon la revendication 1,
**caractérisée en ce**
**que** les moyens pouvant être commandés comprennent une valve d'inversion (26) placée dans la conduite de refoulement (27) et une soupape de dérivation (23, 24, 25) guidée de la valve d'inversion (26) à la conduite d'aspiration (29).

3. Pompe de fluide de chaîne selon la revendication 2,
**caractérisée en ce**
**que** la pompe de fluide de chaîne (20) est logée dans un carter de pompe (38) et que la valve d'inversion (26) et la soupape de dérivation (23, 24, 25) sont intégrées dans le carter de la pompe (38).

4. Pompe de fluide de chaîne selon la revendication 3,
**caractérisée en ce**
**que** la valve d'inversion (26) est configurée comme une soupape de piston pivotant.

5. Pompe de fluide de chaîne selon la revendication 4,
**caractérisée en ce**
**que** la pompe de fluide de chaîne (20) comprend un piston de pompe (21) mobile axialement dans une forure de cylindre (37) dans le carter de pompe (38), qu'une forure de soupape reliée à la forure de cylindre (37) par un conduit de refoulement (30) est placée côté refoulement pour former la soupape d'inversion (26) dans le carter de la pompe (38), forure dans laquelle un corps de soupape substantiellement cylindrique (31) avec un piston pivotant (34) est mis en place et positionné pivotant et que la soupape de dérivation est formée par deux forures de passage (23, 25) qui débouchent dans la forure de cylindre (37) à l'intérieur du carter de la pompe (38) en partant de la forure de soupape (39) ou de la conduite d'aspiration (29) à la même hauteur et qui y sont reliées l'une à l'autre par une rainure annulaire (24) placée sur le piston de la pompe (21).

6. Pompe de fluide de chaîne selon la revendication 5,
**caractérisée en ce**
**que** le piston pivotant (34) présente une réservation (36), en forme de segment de cercle qui s'étend dans le sens axial, qui relie dans une première position du piston pivotant (34) le conduit de refoulement (30) à la conduite de refoulement (27) partant en sens axial et que le piston pivotant (34) présente une rainure de jonction (35) qui, dans une seconde position du piston pivotant (34), relie le conduit de refoulement (30) et la première forure de passage (23) l'un à l'autre.

7. Pompe de fluide de chaîne selon la revendication 6,
**caractérisée en ce**
**que** l'angle de pivotement du piston pivotant (34) entre les deux positions se situe entre 60° et 90°.

8. Pompe de fluide de chaîne selon l'une des revendications 5 à 7,
**caractérisée en ce**
**que** le corps de soupape (31) est réalisé comme une partie en matière synthétique moulée par injection.

9. Pompe de fluide de chaîne selon l'une des revendications 5 à 8,
**caractérisée en ce**
**que** le corps de soupape (31) est réalisé avec un enclenchement avec lequel il est bloqué axialement dans la forure de la soupape (39).

10. Tronçonneuse à chaîne (10) avec une pompe de fluide de chaîne (20) selon l'une des revendications 1 à 9,
**caractérisée en ce**
**que** la tronçonneuse à chaîne (10) comprend une touche de sécurité au moyen de laquelle, le moteur étant en marche, le refoulement de fluide de chaîne peut être activé et désactivé et que la touche de sécurité et les moyens pouvant être commandés ou la soupape d'inversion (26) sont en relation opérationnelle par des moyens d'actionnement de telle manière que, lorsque l'on relâche la touche de sécurité, la conduite de refoulement (27) est interrompue automatiquement et, lors de l'actionnement de la touche de sécurité, l'interruption de la conduite de refoulement (27) est supprimée automatiquement.

11. Tronçonneuse à chaîne selon la revendication 10,
**caractérisée en ce**
**que** les moyens d'actionnement comprennent un câble Bowden.
